# EUROPÄISCHE PATENTSCHRIFT

(11) **EP 1 743 008 B1**
(45) Veröffentlichungstag und Bekanntmachung des Hinweises auf die Patenterteilung: **24.09.2008**
(21) Anmeldenummer: 05734914.4
(22) Anmeldetag: 20.04.2005
(51) Int. Cl.: C09J 201/10

(54) **ZWEIKOMPONENTEN-KLEB-/DICHTSTOFF**
TWO-COMPONENT ADHESIVE/SEALANT
SUBSTANCE ADHESIVE/D'ETANCHEITE A DEUX CONSTITUANTS

(30) Priorität: 05.05.2004 DE 102004022150
(43) Veröffentlichungstag der Anmeldung: 17.01.2007
(73) Patentinhaber: Henkel AG & Co. KGaA, 40589 Düsseldorf (DE)
(72) Erfinder: KOHL, Matthias, 69469 Weinheim (DE); REICHENBACH-KLINKE, Roland, 83278 Traunstein (DE); STEIGERWALD, Patrick, 68309 Mannheim (DE); KERN, Gisbert, 68259 Mannheim-Freudenheim (DE); PRÖBSTER, Manfred, 69226 Nussloch (DE)
(86) Internationale Anmeldenummer: PCT/EP2005/004200
(87) Internationale Veröffentlichungsnummer: WO 2005/108520

(56) Entgegenhaltungen:
- EP-A- 1 090 960
- WO-A-96/35761

## Beschreibung

Die Erfindung betrifft einen 2-komponentigen Kleb-/Dichtstoff auf Basis silanterminierter Prepolymerer, ein Verfahren zu dessen Herstellung und dessen Verwendung zur elastischen Verklebung von zwei oder mehreren gleichen und/oder verschiedenartigen Substraten.

In der metallverarbeitenden Industrie, der Fahrzeugindustrie, im Nutzfahrzeugbau sowie in deren Zulieferindustrie, bei der Autoreparatur oder in der Bauindustrie werden vielfach gleiche oder verschiedene metallische und nichtmetallische Substrate klebend bzw. abdichtend miteinander verbunden. Hierfür stehen bereits eine Reihe von einkomponentigen bzw. 2-komponentigen Kleb-/Dichtstoffen zur Verfügung. Einkomponentige
Kleb-/Dichtstoffe werden in der Regel von den Anwendern bevorzugt, da hierbei keine Misch- und Dosierfehler bei der Anwendung auftreten können. Bei der Verklebung von nichtporösen Substraten ist die Verwendung von einkomponentig feuchtigkeitshärtenden Kleb-/Dichtstoffen jedoch wegen der relativ langsamen Durchhärtungsgeschwindigkeit stark eingeschränkt.

Ein weiterer Nachteil der einkomponentig feuchtigkeitshärtenden Kleb-/Dichtstoffe ist die stark klimaabhängige Aushärtungsgeschwindigkeit, d.h. die Aushärtungsgeschwindigkeit bzw. Durchhärtungsgeschwindigkeit ist nicht nur von der Umgebungstemperatur abhängig, sondern in weit stärkerem Maße auch von der umgebenden Luftfeuchtigkeit, die insbesondere in den Wintermonaten sehr niedrig ist, so dass sich die Durchhärtung, insbesondere bei der Verklebung von nicht porösen Substraten, sehr stark verzögert.

Konventionelle 2-komponentige Kleb-/Dichtstoffsysteme enthalten in der einen Komponente Bindemittel mit einem Typus von reaktiven, vernetzungsfähigen Gruppen und in der zweiten Komponente Bindemittelanteile oder Härter, deren funktionelle Gruppen coreaktiv mit den reaktiven Gruppen der ersten Komponente sind. Beispiele hierfür sind Polyurethansysteme mit isocyanatgruppenhaltigen Komponenten in der einen Komponente und Aminogruppen bzw. Hydroxylgruppen oder Mercaptangruppen enthaltenden Bindemitteln oder Härtern in der zweiten Komponente. In gleicher Weise bestehen die traditionellen zweikomponentigen Epoxidharzsysteme aus einer Komponente mit Bindemitteln, die Epoxygruppen enthalten und die dazugehörige zweite Komponente weist Mercaptangruppen bzw. Aminogruppen auf: Nachteilig bei derartigen Systemen ist es, dass diese Systeme auf Mischungsfehler sehr empfindlich reagieren, da die beiden Komponenten ihre optimale Härtung und Eigenschaften nur erhalten, wenn sie im stöchiometrisch richtigen Verhältnis vollständig miteinander gemischt werden.

Für 2-komponentige Kleb-/Dichtstoffe sind verschiedene Systeme vorgeschlagen worden, um deren Empfindlichkeit gegen Misch- und Dosierfehler zu reduzieren und dabei trotzdem eine rasche von klimatischen Einflüssen weniger abhängige Durchhärtungsgeschwindigkeit zu erzielen.
EP 0678544 A1 beschreibt 2-komponentige Kleb-, Dichtungs- oder Beschichtungsmassen aus einer Komponente A und einer Komponente D. Dabei soll die Komponente A aushärten, sobald sie mit Wasser oder der Komponente D in Berührung kommt, die den Härter für die Komponente A enthält. Gemäß der Lehre dieser Schrift soll die Komponente D entweder eine Komponente B sein, die einen Bestandteil enthält, der mit Wasser oder ggf. auch bei Kontakt mit der Komponente A aushärtet, alternativ soll die Komponente D eine Mischung aus einem Feststoff und einem flüchtigen Bestandteil sein, der die Vernetzung der Komponente A bewirkt. Als Vorteil dieses 2-komponentigen Systems wird angegeben, dass die Komponente D zwar als Härter für die Komponente A wirkt, jedoch ein Überschuss derselben entweder selbst aushärtet oder keine bleibenden störenden Rückstände in der gehärteten Masse zurücklässt.

Einfachere Systeme enthalten als Komponente A feuchtigkeitsvernetzende Bindemittel und als Komponente B Wasser oder Wasser abgebende Substanzen und ggf. einen Katalysator. So beschreibt US-A-6025445 ein
2-komponentiges Kleb-/Dichtstoffsystem bei dem die Komponente A als Hauptbestandteil ein gesättigtes Kohlenwasserstoffpolymer enthält, das Silicium enthaltende Gruppen aufweist, die hydrolysierbare Gruppen an das Siliciumatom gebunden haben und die unter Bildung von Siloxangruppen vernetzbar sind. Die Komponente B enthält einen Silanol-Kondensations-Katalysator und Wasser oder ein hydratisiertes Metallsalz.

WO 96/35761 beschreibt 2-komponentige Kleb-/Dichtstoffe auf der Basis Silanterminierter Prepolymerer, deren Komponente A ein einkomponentig, feuchtigkeitshärtender Kleb-/Dichtstoff mit hoher Anfangsfestigkeit ist und dessen Komponente B ein Vernetzer und/oder Beschleuniger für die Komponente A ist. In besonders bevorzugter Ausführungsformen soll die Komponente B aus einer pastösen, stabilen Mischung aus Weichmachern, Wassern, Fertigungsmitteln und ggf. weiteren Hilfsstoffen bestehen.

Auch für Kleb-/Dichtstoffe auf der Basis von Polyurethan-Prepolymeren oder Hybridsystemen aus Polyurethan-Prepolymeren, die zusätzlich reaktive Silangruppen enthalten, ist vorgeschlagen worden, Pasten aus Wasser und Füllstoffmaterialien als beschleunigende Komponente für an sich feuchtigkeitshärtende Bindemittelsysteme mit zu verwenden, wobei diese Wasserpaste in Viskosität und Fließeigenschaft der entsprechenden Applikation angepasst ist. Die Wasserpaste soll dabei unmittelbar vor der Applikation des Kleb-/Dichtstoffes der feuchtigkeitshärtenden Bindemittelkomponente zugemischt werden. Beispielhaft erwähnt seinen hier die Dokumente US 4,835,012 A, US 4,780,520 A, US 4,758,648 A,
US 4,687,533 A, US 4,625,012 A oder US 4,525,511 A. All diesen Systemen ist gemeinsam, dass die Komponente B im wesentlichen nur Wasser oder wasserabgebende Substanzen, ggf. Füllstoffe, ggf. Weichmacher sowie Verdickungsmittel und ggf. Katalysatoren enthält, so dass zwangsläufig diese Komponente B in untergeordneter Menge dem Hauptbestandteil, der Bindemittelkomponente, zugemischt werden soll. Typische Mischungsverhältnisse sind 100 Teile feuchtigkeitsreaktive bindemittelhaltige Komponente A auf 1 bis 5 Teile Wasser enthaltende Komponente B bis zu einem Verhältnis 10 Teile feuchtigkeitshärtende Bindemittelkomponente A auf 1 Teil wasserhaltige Komponente B. Nachteilig bei diesen Systemen ist, dass bei maschinellem Auftrag, insbesondere aufgrund der extremen Mischungsverhältnisse, Schwierigkeiten in der Dosierung und homogenen Einmischung der untergeordneten B-Komponente in die A-Komponente auftreten. Für PolyurethanSysteme ist sogar bekannt, dass eine homogene Einmischung überhaupt nicht möglich ist, die wasserhaltige B-Komponente wird dort vielmehr streifenförmig eingemischt. Abgesehen von einem hohen Steuerungsaufwand für den maschinellen Auftrag bedeutet dies, dass die Diffusionsprozesse des Wassers aus dem hoch mit Wasser angereicherten Streifen in das auszuhärtende Bindemittelsystem immer noch die Aushärtungsgeschwindigkeit signifikant verlangsamen. Für 10:1-Mischverhältnisse liegen für den Kleinanwender und für den handwerklichen Bereich auch Kartuschenapplikationsgeräte vor, bei denen manuell oder druckluftbetriebene Kartuschenpistolen verwendet werden. Dabei werden die Austrittsöffnungen der beiden Komponentenkartuschen über einen Adapter zusammengeführt, wobei die beiden Produktströme in einem Statikmischer durchmischt werden. Wegen des starken Druckabfalls über einem Statikmischer sind nur kurze Mischstrecken technisch möglich, so dass es hierbei sehr schwierig ist, eine homogene Mischung zu erzielen. Daher sind solche Systeme auch nur für das Mischungsverhältnis 10:1 vorgesehen und nicht etwa für ein Mischungsverhältnis 100:2.

Die EP-A-370463, EP-A-370464 sowie die EP-A-370531 beschreiben zwei- oder mehrkomponentige Klebstoffzusammensetzungen, deren eine Komponente ein flüssiges organisches elastomeres Polymer mit wenigstens einer Silangruppen enthaltenden reaktiven Gruppe pro Molekül sowie ein Härtungsmittel für ein Epoxidharz enthält und deren zweite Komponente ein Epoxidharz enthält sowie ggf. einen Härtungskatalysator für das Silangruppen enthaltende elastomere Polymer. Als Härtungsmittel für die Epoxy-Komponente werden dabei die in der Epoxidchemie üblichen Di- oder Polyamine, Carbonsäureanhydride, Alkohole und Phenole und ggf. typische Katalysatoren für die Epoxidreaktion, wie tertiäre Amine, deren Salze, Imidazole, Dicyandiamid usw. vorgeschlagen. Derartige 2-komponentige Systeme haben die spezifischen Nachteile aller Standard-Zweikomponentensysteme: die Härtungsgeschwindigkeit sowie die Endeigenschaften des ausgehärteten Klebstoffes hängen in sehr hohem Maße von der korrekten Einhaltung des Mischungsverhältnisses der Komponenten sowie von der Vollständigkeit der Durchmischung ab.

Die EP-A-520426 beschreibt härtbare Zusammensetzungen auf der Basis von Silangruppen enthaltenden Oxyalkylenpolymeren, die Mikrohohlkugeln enthalten und dadurch spezifisch leichte härtbare Zusammensetzungen ermöglichen. Es wird dort angegeben, daß diese Zusammensetzungen auch als 2-Komponentensysteme eingesetzt werden können, wobei die eine Komponente das Silangruppen enthaltende Oxyalkylenpolymer, den Füllstoff und den Weichmacher enthält, und die zweite Komponente Füllstoff, Weichmacher und einen Kondensationskatalysator. Keine dieser Schriften zum Stand der Technik macht Angaben darüber, ob die dort beschriebenen Zusammensetzungen eine ausreichende hohe Anfangshaftfestigkeit besitzen, um ein mechanisches Fixieren unmittelbar nach dem Fügen der Teile zu vermeiden. Weiterhin werden keine Angaben gemacht, ob bei den 2-komponentigen Zusammensetzungen gemäß o.g. Stand der Technik die Komponente A, die das silanterminierte Prepolymer enthält, für sich alleine vollständig aushärtet.

Es besteht also Bedarf an 2-komponentigen Kleb-/Dichtstoffen, bei denen vorzugsweise beide zu mischenden Komponenten im gleichen Volumenverhältnissen miteinander gemischt werden müssen und die sehr tolerant in Bezug auf Misch- und Dosierfehler bei der Anwendung sind.

Die erfindungsgemäße Lösung dieser Aufgabe ist den Patentansprüchen zu entnehmen. Sie besteht im wesentlichen aus einer Kleb-/Dichtstoff zusammensetzung bestehend aus
a) einer Komponente A enthaltend mindestens ein silanterminiertes Prepolymer, mindestens einen Katalysator für die Silanvernetzung, niedermolekulare und organofunktionelle Silane und
b) einer Komponente B enthaltend mindestens ein silanterminiertes Prepolymer, Wasser sowie wasserlösende oder wasserabsorbierende Mittel.

Als silanterminierte Prepolymere im Sinne dieser Erfindung sollen dabei Polymere mit einem Molekulargewichtsbereich zwischen 1000 und 50000 verstanden werden, die mindestens eine reaktive Endgruppe der folgenden Formel enthält: 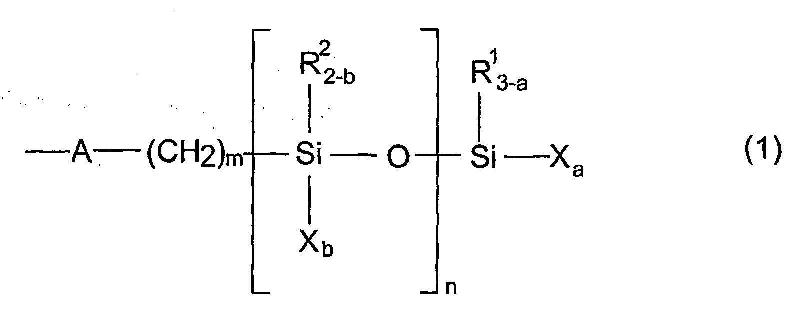 wobei A ein 1,5- bis 4-wertiger Rest eines Polyethers, Polyesters, (Meth)acrylat-Polymers, Polybutadiens oder Polyisobutylens darstellt, n eine ganze Zahl von 0 bis 4, m eine ganze Zahl von 1 bis 3 ist und die Reste R¹ bis R² ein nicht hydrolysierbarer C1- bis C4-Alkylrest und X ein hydrolysierender Alkoxyrest, Acetoxyrest, Oximetherrest, Amidrest, Enoxyrest oder eine Hydroxylgruppe sein können, wobei a 1 bis 3 und b 0 bis 2 sein kann. Vorzugsweise sind mindestens zwei dieser Reste X hydrolysierbar, d.h. a und/oder b sind mindestens 2.

Die Herstellung von feuchtigkeitshärtenden bei Raumtemperatur härtbaren Zusammensetzungen mit reaktiven Silangruppen auf Basis von Acrylat- bzw. Methacrylatderivaten wird beispielsweise in der JP-B-84/78221, der JP-B-84/78222, der US-A-4491650, der EP-A-265929 oder der US-A-4567107 beschrieben.

Die besonders bevorzugten silanterminierten Prepolymere auf der Basis von Polyethern können prinzipiell auf verschiedene Weise hergestellt werden:
- hydroxyfunktionelle Polyether werden mit ungesättigten Chlorverbindungen, z.B. Allylchlorid, in einer Ethersynthese in Polyether mit endständigen olefinischen Doppelbindungen umgesetzt, die ihrerseits mit Hydrosilanverbindungen, die hydrolysierbare Gruppen haben, wie z.B. HSi(OCH₃)₃ in einer Hydrosilylierungsreaktion unter dem katalytischen Einfluß von beispielsweise Übergangsmetallverbindungen der 8. Gruppe zu silanterminierten Polyethern umgesetzt werden.
- In einem anderen Verfahren werden die olefinisch ungesättigte Gruppen enthaltenden Polyether mit einem Mercaptosilan wie z.B. 3-Mercaptopropyltrialkoxysilan umgesetzt.
- Bei einem weiteren Verfahren werden zunächst Hydroxylgruppen-haltige Polyether mit Di- oder Polyisocyanaten umgesetzt, die dann ihrerseits mit aminofunktionellen Silanen oder mercaptofunktionellen Silanen zu silanterminierten Prepolymeren umgesetzt werden.

Eine weitere Möglichkeit sieht die Umsetzung von hydroxyfunktionellen Polyethern mit isocyanatofunktionellen Silanen wie z.B. 3-Isocyanatopropyltrimethoxysilan vor. Anstelle des 3-Isocyanatopropyltrimethoxysilans kann auch das entsprechende 3-Isocyanatopropylalkyldimethoxysilan eingesetzt werden, wobei der Alkylrest ein C₁ bis C₈ Alkylrest sein kann. Weiterhin kann Isocyanatomethyldimethoxysilan oder Isocyanatomethyltrimethoxysilan eingesetzt werden. Anstelle der Methoxysilane können im Prinzip auch deren Ethoxy- oder Propoxyanaloga verwendet werden.

Diese Herstellverfahren und die Verwendung der oben genannten silanterminierten Prepolymeren mit Polyether-Rückgrat in Kleb-/Dichtstoffanwendungen sind beispielsweise in den folgenden Patentschriften genannt: US-A-3971751, US-A-4960844, US-A-3979344, US-A-3632557, DE-A-4029504, EP-A-601021, EP-A-370464.

Bei den 2-komponentigen Kleb-/Dichtstoffen gemäß vorliegender Erfindung enthält die Komponente A ein Silangruppen enthaltendes Prepolymer, Füllstoffe, Weichmacher, Haftvermittler, Rheologiehilfsmittel, Stabilisatoren, Katalysator(en), Farbpigmente sowie weitere übliche Hilfs- und Zusatzstoffe. Aus diesem Grunde kann die Komponente A für sich alleine als einkomponentiger, feuchtigkeitshärtender Kleb-/Dichtstoff eingesetzt werden und erzielt so bereits unmittelbar nach dem Fügen der Teile eine sehr hohe Anfangshaftfestigkeit.

Als reaktive Silangruppen enthaltende Prepolymere (silanterminierte Prepolymere) im Sinne dieser Erfindung können grundsätzlich alle oben beschriebenen silanterminierten Prepolymere eingesetzt werden, besonders bevorzugt sind jedoch die Alkoxysilangruppen enthaltenden Polymeren auf der Basis von Oxyalkylenpolymeren (Polyoxyalkylenglykolen), wie sie erstmals in der US-A-3971751 beschrieben wurden. Diese Prepolymeren sind unter dem Namen "MS-Polymer" (Handelsname der Firma Kanegafuchi) im Handel erhältlich.

Alternativ oder zusätzlich zu den vorgenannten Alkoxysilangruppen enthaltenen Oxyalkylenpolymeren können als reaktive Silangruppen enthaltene Prepolymere auch die Prepolymeren mit reaktiven Silangruppen auf der Basis von Acrylat- bzw. Methacrylatderivaten eingesetzt werden, wie sie beispielsweise in der EP-A-265929 beschrieben sind.

Als Weichmacher können alle für Kleb-/Dichtstoffe üblichen Weichmacher verwendet werden, z.B. die diversen Phthalsäureester, Arylsulfonsäureester, Alkyl- und/oder Arylphosphate sowie die Dialkylester der aliphatischen und aromatischen Dicarbonsäuren.

Als Füllstoffe und/oder Pigmente können alle gängigen beschichteten oder unbeschichteten Füllstoffe und/oder Pigmente eingesetzt werden, vorzugsweise sollten diese jedoch gering in ihrem Wassergehalt sein. Beispiele für geeignete Füllstoffe sind Kalksteinmehl, natürliche, gemahlene Kreiden (Calciumcarbonate oder Calcium-Magnesiumcarbonate), gefällte Kreiden, Talk, Glimmer, Tone oder Schwerspat. Beispiele für geeignete Pigmente sind Titandioxid, Eisenoxide oder Ruß.

Weiterhin enthält die Komponente A vorzugsweise niedermolekulare Alkoxysilanverbindungen wie z.B. 3-Glycidoxy-Propyltrialkoxysilan, 3-Acryloxypropyltrialkoxysilan, 3-Aminopropyltrialkoxysilan, 1-Aminoalkyltrialkoxysilan, α-Methacryloxymethyltrialkoxysilan, Vinyltrialkoxysilan, N-Aminoethyl-3-Aminopropyl-Methyldialkoxysilan, Phenylaminopropyltrialkoxysilan, Aminoalkyltrialkoxydisilan, i-Butylmethoxysilan, N(2- Aminoethyl)-3-aminopropyltrialkoxysilan oder deren Mischungen. Anstelle der vorgenannten Trialkoxysilanverbindungen können auch die entsprechenden Dialkoxysilan-Analoga eingesetzt werden, hierbei ist ein Alkoxyrest durch eine nicht funktionelle C₁ - C₈-Alkylgruppe ersetzt. Weiterhin können über die Alkoxygruppe oligomerisierte niedermolekulare Oligoalkoxysilane der vorgenannten niedermolekularen Alkoxysilanverbindungen eingesetzt werden. Auch Mischungen der vorgenannten niedermolekularen Alkoxysilanverbindungen können verwendet werden.

Dabei kann die Alkoxygruppe eine Methoxy-, Ethoxy-, Propoxy-, Methoxypropylenglykolether-, Ethoxypropylenglykolether- oder auch eine Butoxygruppe oder eine noch höhere homologe Alkoxygruppe sein, besonders bevorzugt sind die Methoxy-, und / oder Ethoxy- Derivate.

Weiterhin sollte die Komponente A oder B einen Silanolkondensationskatalysator (Härtungskatalysator) enthalten, Beispiele für derartige Katalysatoren sind Titansäureester wie Tetrabutyltitanat, Tetrapropyltitanat, Zinn-carboxylate wie Dibutylzinndilaurat, Dibutylzinnmaleat, Dibutylzinndiacetat, Zinn(II)octoat, Zinnnaphthenat, Zinn(II)alkoxylate, Dibutylzinnalkoxylate, Dibutylzinnacetylacetonat, Aminoverbindungen wie Morpholin, N-Methylmorpholin, 2-Ethyl-2-Methylimidazol, 1,8-Diazadicyclo(5.4.0)undecen-7 (DBU), Carbonsäuresalze dieser Amine oder langkettige aliphatische Amine.

Weiterhin kann die Komponente A der erfindungsgemäßen Kleb-/Dichtstoffe ggf. zusätzliche Stabilisatoren enthalten. Als "Stabilisatoren" im Sinne dieser Erfindung sind Antioxidantien, UV-Stabilisatoren oder Hydrolyse-Stabilisatoren zu verstehen. Beispiele hierfür sind die handelsüblichen sterisch gehinderten Phenole und/oder Thioether und/oder substituierten Benzotriazole und/oder Amine vom "HALS"-Typ (Hinderered Amine Light Stabilizer).

Die Komponente B der erfindungsgemäßen 2-komponentigen Kleb-/Dichtstoffe enthält mindestens ein silanterminiertes Prepolymer, Wasser sowie wasserlösende oder adsorbierende Mittel. Das oder die silanterminierte(n) Prepolymere(n) sind vorzugsweise die gleichen oder ähnliche wie in der A-Komponente, d.h. es kann sowohl ein Prepolymer vom Typ der silanterminierten Polyalkylenoxide Verwendung finden als auch ein silanfunktionelles Prepolymer auf der Basis von Acrylaten oder Methacrylaten oder auch Mischungen der beiden Polymertypen. Die Komponente B enthält dabei neben den silanfunktionellen Prepolymeren 1 bis 20 Gew.-%, vorzugsweise 3 bis 15 Gew.-% Wasser, wobei sich diese Mengenangabe auf das Gesamtgewicht der Komponente B bezieht. Das Wasser ist dabei vorzugsweise an anorganische Verdickungsmitteln adsorbiert oder in organischen Verdickungsmitteln gelöst bzw. gequollen.

Als Verdickungsmittel für die bevorzugte Ausführungsform werden wasserlösliche bzw. wasserquellbare Polymere oder anorganische Verdickungsmittel bevorzugt. Beispiele für organische natürliche Verdickungsmittel sind Agar-agar, Carrageen, Tragant, Gummi arabicum, Alginate, Pektine, Polyosen, Guar-Mehl, Stärke, Dextrine, Gelatine, Casein. Beispiele für organische voll- oder teilsynthetische Verdickungsmittel sind Carboxymethylcellulose, Celluloseether, Hydroxyethylcellulose, Hydroxypropylcellulose, Poly(meth)acrylsäurederivate, Polyvinylether, Polyvinylalkohol, Polyamide, Polyimine. Beispiele für anorganische Verdickungsmittel bzw. Adsorptionsmittel für das Wasser sind Polykieselsäuren, hochdisperse, pyrogene, hydrophile Kieselsäuren, Tonmineralien wie Montmorillonit, Kaolinit, Halloysit, Aluminiumhydroxid, Aluminiumoxidhydrat, Aluminiumsilikate, Talkum, Quarzmineralien, Magnesiumhydroxid oder dergleichen.

Sowohl die Komponente A als auch die Komponente B kann gegebenenfalls gängige Rheologiehilfsmittel, wie z.B. hochdisperse Kieselsäuren, Bentone, Harnstoffderivate, Amidwachse, Wachse, fibrillierte oder Pulp-Kurzfasern oder Rizinusöl-Derivate enthalten.

Die Komponente A und die Komponente B können jeweils nach herkömmlichen und an sich bekannten Mischverfahren für pastöse Zusammensetzungen hergestellt werden. Vorzugsweise werden sie in evakuierbaren Mischaggregaten hergestellt, um Gaseinschlüsse zu eliminieren. Beispielhaft erwähnt seien die folgenden geeigneten Mischaggregate Planetenmischer, Planetendissolver, Kneter oder Innenmischer.

Die Komponente B kann in analoger Weise wie die Komponente A Füllstoffe, Weichmacher, Stabilisatoren, Farbpigmente sowie weitere Hilfs- und Zusatzstoffe enthalten.

Wie bereits oben erwähnt, ist die Zusammensetzung der erfindungsgemäßen Komponente A so beschaffen, daß diese für sich allein vollständig aushärtet und vergleichbare Endfestigkeitswerte liefert wie die Mischung aus Komponente A und Komponente B. Da auch die Komponente B reaktionsfähiges Polymer enthält, wird dessen Reaktion durch den Zutritt des Katalysators aus der Komponente A ebenfalls soweit aktiviert, das auch die Komponente B in die Vernetzungsreaktion miteinbezogen wird. Daher ist dieses Klebstoffsystem sehr unempfindlich gegen Misch- und Dosierfehler zwischen Komponente A und Komponente B, daher kann das Verhältnis von Komponente A und B in sehr weiten Bereichen variiert werden, ohne daß die Endfestigkeit der Klebeverbindung darunter leidet. Dies ist gegenüber herkömmlichen 2-komponentigen Kleb-/Dichtstoffen ein entscheidender Vorteil. Gegenüber einkomponentigen Systemen besteht der Vorteil darin, daß auch Verklebungen von nichtporösen Substraten weitgehend unabhängig von der Luftfeuchtigkeit schnell durchhärten. Die Komponente A wird mit der Komponente B in einem Verhältnis von 1 : 5 bis 5 : 1 Gewichtsteilen, vorzugsweise 1 : 2 bis 2 : 1, insbesondere 1 : 1 Gewichtsteilen vermischt.

Überraschenderweise beeinträchtigt die hohe Wasserkonzentration in der Komponente B nicht die Lagerstabilität der Komponente B, diese ist im Gegenteil so gut, dass praktisch keine verfrühte Härtung der mit Wasser versehenden Komponente B eintritt. Weiterhin ist überraschend, dass die offene Zeit eines gemischten 2-komponentigen Materials aus Komponente A und Komponente B nicht proportional zum zugesetzten Anteil des Wassers in der B-Komponente sinkt, sondern ganz im Gegenteil steigt. Dies ist ein erwünschter Effekt, denn viele der bisher bekannten Dicht- und Klebstoffsysteme auf der Basis von silanmodifizierten Polymeren leiden unter einer sehr kurzen offenen Zeit. Dies ist nachteilig beim Abdichten oder Verkleben großer Werkstücke, da bei kurzen offenen Zeiten vor dem Fügen schon nennenswert die Vernetzungsreaktion einsetzt, beginnend mit einer Viskositätserhöhung des Bindemittels. Diese Viskositätserhöhung bedeutet eine Verminderung der Benetzung der Substrate, die in der Regel nur durch Erhöhung des Anpressdrucks ausgeglichen werden kann. Auch eine beschleunigte Hautbildung wird bei den erfindungsgemäßen 2-komponentigen Systemen nicht beobachtet.

Wie bereits eingangs erwähnt, zeichnen sich die erfindungsgemäßen Kleb-/Dichtstoffe zusätzlich dadurch aus, dass die Oberflächen der meisten Substrate keinerlei Vorbehandlung durch einen Primer benötigen. Dies gilt insbesondere für die metallischen Substrate wie z.B. Aluminium, eloxiertes Aluminium, Stahl (insbesondere Edelstahl), verzinkte Stähle, vorbehandelte (insbesondere phosphatierte) Stähle, Kupfer, Messing, Glas, Holz und eine große Anzahl von Kunststoffen.

Die erfindungsgemäßen Kleb-/Dichtstoff-Zusammensetzungen lassen sich daher zur elastischen Verklebung von zwei oder mehreren gleichen oder verschiedenartigen Substraten der vorgenannten Art verwenden, sie eignen sich auch zur Nahtabdichtung oder Beschichtung von Bauteilen aus den vorgenannten Werkstoffen.

Anhand der nachfolgenden Beispiele soll die Erfindung näher erläutert werden. Alle Mengenangaben sind in Gewichtsprozent, falls nicht anders angegeben.

### Beispiel

In einem Planetenmischer wurden nacheinander eine Komponente A sowie drei Ausführungsformen der Komponente B unter hoher Scherung gemischt, während des Mischens zur Entgasung evakuiert und danach in Kartuschen abgefüllt.

### Beispiel 1

Die Komponente A hatte die in der nachfolgenden Tabelle aufgeführte Zusammensetzung:

| Bezeichnung | % |
|---|---|
| Prepolymer S303H (1) | 34,500 % |
| Prepolymer SAT 10 (2) | 10,000 % |
| Alkylsulfonsäurephenylester, Mesamoll Fa. Bayer | 1,300 % |
| Bis(2,2,6,6-tetramethyl-4-piperidyl sebacat)-Lösung | 2,400 % |
| Kieselsäure HDK N 20, Fa. Wacker | 1,870 % |
| Kreide Socal U1S1, Fa. Solvay | 41,230 % |
| Ruß Monarch 580, Fa. Cabot | 1,000 % |
| 3-Aminopropytrimethoxysilan | 5,800 % |
| 3-Glycidyloxypropyltrimethoxysilan | 1,400 % |
| DBTB (Di-n-butyl-dibutoxy-zinn) | 0,500 % |
| | 100,00 % |

| | |
|---|---|
| (1) Dimethoxymethylsilyl-terminierter Polypropylenoxidether, Fa. Kanegafuchi (2) Difunktioneller Polypropylenoxidether mit terminalen Dimethoxymethylsilyl-Gruppen, Fa. Kanegafuchi | |

### Beispiel 2

In der nachfolgenden Tabelle sind die Zusammensetzungen der drei B-Komponenten aufgeführt:

| Bezeichnung | Komponente B1 | Komponente B2 | Komponente B3 |
|---|---|---|---|
| MS-Polymer S303H | 53,000 % | 53,000 % | 53,000% |
| Silikolloid P87 (Kieselsäure-Kaolinit Gemisch) | 44.000% | 41,000% | 35,000% |
| Wasser entmin. | 3,000% | 6,000% | 12,000% |
| | 100,000% | 100,000% | 100,000% |

Es wurde die offene Zeit bestimmt, innerhalb derer Mischung aus Komponente A und der jeweiligen Komponente B noch weiterverarbeitet werden konnte, dabei wurde diese offene Zeit zum einen 2 Tage nach Herstellung und getrennter Lagerung der Komponenten bestimmt und zum anderen nach 21-tägiger getrennter Lagerung der beiden Komponenten bei 50°C als Indiz für die Langzeit-Lagerstabilität der beiden Komponenten bei getrennter Einzellagerung. Wie aus den nachfolgenden Ergebnissen ersichtlich ist, nimmt die Lagerstabilität des Systems überraschenderweise mit zunehmenden Wassergehalt in der B Komponente zu.

### Offene Zeit

| | | Offene Zeit (min) 2d nach Herstellung | Offene Zeit (min) nach Lagerung 21d 50°C |
|---|---|---|---|
| A | B1 | 40 | 5 |
| A | B2 | 38 | 20 |
| A | B3 | 45 | 30-35 |

An dem 2-komponenten System aus Komponente A und Komponente B 2 wurden die nachfolgenden Prüfergebnisse erzielt:

| Hautbildezeit | ca. 20 | min | | |
|---|---|---|---|---|
| Shore A¹) | 60 | | Shore A²) | 60 |
| Reißfestigkeit¹) | 3,1 | MPa | | |
| Reißdehnung¹) | 125 | % | | |
| Anfangsfestigkeit³) | ca. 4 | h | bei Lagerung bei 23 °C | |
| Offene Zeit ³⁾ | 30 | min | Bei 23°C und 40% relative Luftfeuchte | |

| | | | | |
|---|---|---|---|---|
| ¹⁾ nach 14 Tagen Lagerung bei Normklima ²⁾ nach 14 Tagen Lagerung bei Normklima + 14 Tage Lagerung bei 70°C ³⁾ gemessen an Al99.5; in Anlehnung an EN 1465; Schichtstärke: 2mm; Prüfgeschwindigkeit: 20 mm/min | | | | |

Die erfindungsgemäßen Kleb-/Dichtstoffzusammensetzungen unterschieden sich in UV- und Witterungsstabilität, Temperaturstabilität und Haftungsverhaltung nicht von den bekannten einkomponentigen Kleb-/Dichtstoffen auf der Basis von silanterminierten Polyoxypropylenglykolen. Weiterhin wiesen sie ein ausgezeichnetes Haftverhalten auf allen metallischen Untergründen sowie Glas und Glasfasern verstärkten Kunststoffen auf.

## Patentansprüche

1. Kleb-/Dichtstoff-Zusammensetzung bestehend aus
a) einer Komponente A enthaltend mindestens ein silanterminiertes Prepolymer, mindestens einen Katalysator für die Silanvernetzung, niedermolekulare und organofunktionelle Silane, und
b) einer Komponente B enthaltend mindestens ein silanterminiertes Prepolymer, Wasser sowie Wasser lösende oder adsorbierende Mittel.

2. Kleb-/Dichtstoff-Zusammensetzung gemäß Anspruch 1, **dadurch gekennzeichnet, dass** die Komponente(n) A und / oder B zusätzlich Füllstoffe, Weichmacher, Alterungsschutzmittel, Rheologiehilfsmittel und weitere übliche Hilfs- und Zusatzstoffe enthält / enthalten

3. Kleb-/Dichtstoff-Zusammensetzung gemäß mindestens einem der vorhergehenden Ansprüche, **dadurch gekennzeichnet, dass** die Komponente B eine pastöse, stabile Mischung aus mindestens einem silanterminierten Prepolymer, Weichmacher(n), Wasser, Verdickungsmitteln und ggf. weiteren Hilfsstoffen ist.

4. Kleb-/Dichtstoff-Zusammensetzung gemäß Anspruch 3, **dadurch gekennzeichnet, dass** als Verdickungsmittel in der Komponente B anorganische Verdickungsmittel aus der Gruppe Polykieselsäuren, hochdisperse pyrogene Kieselsäuren, Aluminiumhydroxid, Aluminiumoxidhydrat, Talkum, Quarzmineralien, Magnesiumhydroxid Tonmineralien wie Montmorillonite oder Kaolinite verwendet werden.

5. Kleb-/Dichtstoff-Zusammensetzung gemäß Anspruch 3, **dadurch gekennzeichnet, dass** als Verdickungsmittel in der Komponente B organische Verdickungsmittel aus der Gruppe der organischen natürlichen Verdickungsmittel wie Agar-agar, Carrageen, Tragant, Gummi arabicum, Alginate, Pektine, Polyosen, Guar-Mehl, Stärke, Dextrine, Gelatine, Casein. oder der organischen voll- oder teilsynthetischen Verdickungsmittel wie Carboxymethylcellulose, Celluloseether, Hydroxyethylcellulose, Hydroxypropylcellulose, Poly(meth)acrylsäurederivate, Polyvinylether, Polyvinylalkohol, Polyamide, Polyimine verwendet werden.

6. Kleb-/Dichtstoff-Zusammensetzung gemäß mindestens einem der vorhergehenden Ansprüche, **dadurch gekennzeichnet, dass** als Katalysator für die Silanvernetzung zinnorganische Verbindungen verwendet werden.

7. Kleb-/Dichtstoff-Zusammensetzung gemäß mindestens einem der vorhergehenden Ansprüche, **dadurch gekennzeichnet, dass** das niedermolekulare und organofunktionelle Silan ausgewählt wird aus 3-Glycidoxy-propyltrialkoxysilan, 3-Acryloxypropyltrialkoxysilan, 3-Aminopropyltrialkoxysilan, Vinyltrialkoxysilan, Phenylaminopropyltrialkoxysilan, Aminoalkyltrialkoxydisilan, N(2- Aminoethyl)-3-aminopropyltrialkoxysilan, 3-Glycidoxy-propylalkyldialkoxysilan, 3-Acryloxypropyl-alkyldialkoxysilan, 3-Aminopropyl-alkyldialkoxysilan, Vinylalkyldialkoxysilan, Phenylaminopropyl-alkyldialkoxysilan, Aminoalkylalkyldialkoxydisilan, N(2- Aminoethyl)-3-aminopropylalkyl-dialkoxysilan, i-Butylmethoxysilan oder deren Mischungen.

8. Kleb-/Dichtstoff-Zusammensetzung gemäß mindestens einem der vorhergehenden Ansprüche, **dadurch gekennzeichnet, dass** die Komponente B 1 bis 20 Gew.%, vorzugsweise 3 bis 15 Gew.% Wasser enthält, bezogen auf das Gesamtgewicht der Komponente B.

9. Kleb-/Dichtstoff-Zusammensetzung gemäß mindestens einem der vorhergehenden Ansprüche, **dadurch gekennzeichnet, dass** das Mischungsverhältnis der Komponenten A und B 1 : 5 bis 5 : 1, vorzugsweise 1 : 2, bis 2 : 1 besonders bevorzugt 1 : 1 beträgt.

10. Verwendung der Kleb-/Dichtstoff-Zusammensetzung gemäß mindestens einem der vorhergehenden Ansprüche zur elastischen Verklebung von zwei oder mehreren gleichen und/oder verschiedenartigen Substraten.

11. Verfahren zum primerlosen Verbinden von zwei oder mehreren gleichen und/oder verschiedenen Substraten, **dadurch gekennzeichnet, dass**
- eine Kleb-/Dichtstoff-Zusammensetzung nach mindestens einem der Ansprüche 1 bis 8 auf ein Substrat aufgetragen wird,
- das oder die weitere(n) Substrat(e) auf die freie Kleb-/Dichtstoff Oberfläche gefügt wird (werden)
- und der so hergestellte Verbund ohne weitere mechanische Fixierung schnell weiterverarbeitet und/oder transportiert werden kann.

12. Verfahren gemäß Anspruch 10, **dadurch gekennzeichnet, dass** vor der Applikation die Komponente A mit der Komponente B in einem Verhältnis von 1 : 5 bis 5 : 1, vorzugsweise 1 : 2, bis 2 : 1 besonders bevorzugt 1 : 1 Gewichtsteilen gemischt wird.

13. Verfahren gemäß Anspruch 11 und/oder 12, **dadurch gekennzeichnet, dass** als zu verbindende Substrate Bauteile aus (ggf. lackierten) Metallen wie Aluminium, Stahl (insbesondere Edelstahl), verzinkte Stähle, vorbehandelte (insbesondere phosphatierte) Stähle, Kupfer, Messing, Glas, Holz und/oder Kunststoffe verwendet werden.

## Claims

1. An adhesive/sealant composition consisting of
a) a component A containing at least one silane-terminated prepolymer, at least one catalyst for silane crosslinking, low molecular weight and organofunctional silanes, and
b) a component B containing at least one silane-terminated prepolymer, water and water-dissolving or water-adsorbing agents.

2. An adhesive/sealant composition according to claim 1, **characterised in that** component(s) A and/or B additionally contain(s) fillers, plasticisers, antioxidants, rheological auxiliaries and further conventional auxiliary substances and additives.

3. An adhesive/sealant composition according to at least one of the preceding claims, **characterised in that** component B is a pasty, stable mixture of at least one silane-terminated prepolymer, plasticiser(s), water, thickeners and optionally further auxiliary substances.

4. An adhesive/sealant composition according to claim 3, **characterised in that** the thickeners used in component B are inorganic thickeners from the group of polysilicic acids, highly disperse pyrogenic silicas, aluminium hydroxide, aluminium oxide hydrate, talcum, quartz minerals, magnesium hydroxide, clay minerals such as montmorillonite or kaolinite.

5. An adhesive/sealant composition according to claim 3, **characterised in that** the thickeners used in component B are organic thickeners from the group of organic natural thickeners such as agar-agar, carrageenan, tragacanth, gum arabic, alginates, pectins, polyoses, guar flour, starch, dextrins, gelatin, casein, or organic entirely or partially synthetic thickeners such as carboxymethylcellulose, cellulose ethers, hydroxyethylcellulose, hydroxypropylcellulose, poly(meth)acrylic acid derivatives, polyvinyl ether, polyvinyl alcohol, polyamides, polyimines.

6. An adhesive/sealant composition according to at least one of the preceding claims, **characterised in that** organotin compounds are used as the catalyst for silane crosslinking.

7. An adhesive/sealant composition according to at least one of the preceding claims, **characterised in that** the low molecular weight and organofunctional silane is selected from 3-glycidoxypropyltrialkoxysilane, 3-acryloxypropyltrialkoxysilane, 3-aminopropyltrialkoxysilane, vinyltrialkoxysilane, phenylaminopropyltrialkoxysilane, aminoalkyltrialkoxydisilane, N-(2-aminoethyl)-3-aminopropyltrialkoxysilane, 3-glycidoxypropylalkyldialkoxysilane, 3-acryloxypropylalkyldialkoxysilane, 3-aminopropylalkyldialkoxysilane, vinylalkyldialkoxysilane, phenylaminopropylalkyldialkoxysilane, aminoalkylalkyldialkoxydisilane, N-(2-aminoethyl)-3-aminopropylalkyldialkoxysilane, i-butylmethoxysilane or mixtures thereof.

8. An adhesive/sealant composition according to at least one of the preceding claims, **characterised in that** component B contains 1 to 20 wt.%, preferably 3 to 15 wt.% of water, relative to the total weight of component B.

9. An adhesive/sealant composition according to at least one of the preceding claims, **characterised in that** the mixing ratio of components A and B amounts to 1:5 to 5:1, preferably 1:2 to 2:1, particularly preferably 1:1.

10. Use of the adhesive/sealant composition according to at least one of the preceding claims for the resilient adhesive bonding of two or more identical and/or different substrates.

11. A method for primerless bonding of two or more identical and/or different substrates, **characterised in that**
- an adhesive/sealant composition according to at least one of claims 1 to 8 is applied onto a substrate,
- the further substrate(s) is/are placed on the open adhesive/sealant surface
- and the resultant assembly may quickly be further processed and/or transported without further mechanical fixing.

12. A method according to claim 10, **characterised in that**, prior to application, component A is mixed with component B in a ratio of from 1:5 to 5:1, preferably 1:2 to 2:1, particularly preferably 1:1 parts by weight.

13. A method according to claim 11 and/or claim 12, **characterised in that** the substrates to be joined which are used are components made from (optionally coated) metals such as aluminium, steel (in particular stainless steel), galvanised steels, pretreated (in particular phosphated) steels, copper, brass, glass, wood and/or plastics.

## Revendications

1. Composition d'adhésif/matériaux d'étanchéité constituée par
a) un composant A contenant au moins un prépolymère à terminaison silane, au moins un catalyseur pour la réticulation du silane, des silanes à bas poids moléculaire et organofonctionnels ; et
b) un composant B contenant au moins un prépolymère à terminaison silane, de l'eau et des agents se dissolvant dans l'eau ou absorbant l'eau.

2. Composition d'adhésif/matériaux d'étanchéité selon la revendication 1, **caractérisée en ce que** le/les composant(s) A et/ou B contient/contiennent en outre des matières de charge, des plastifiants, des agents de protection contre le vieillissement, des adjuvants rhéologiques et d'autres adjuvants et additifs habituels.

3. Composition d'adhésif/matériaux d'étanchéité selon au moins une des revendications précédentes, **caractérisée en ce que** le composant B représente un mélange pâteux stable d'au moins un prépolymère à terminaison silane, d'un ou de plusieurs plastifiants, d'eau, d'épaississants et, le cas échéant, d'autres adjuvants.

4. Composition d'adhésif/matériaux d'étanchéité selon la revendication 3, **caractérisée en ce qu'**on utilise, comme épaississants dans le composant B, des épaississants inorganiques du groupe des acides polysiliciques, des acides siliciques pyrogenes fortement dispersés, de l'hydroxyde d'aluminium, de l'oxydhydrate d'aluminium, du talc, des matières minérales à base de quartz, de l'hydroxyde de magnésium, des matières minérales à base d'argile, telles que la montmorillonite ou la kaolinite.

5. Composition d'adhésif/matériaux d'étanchéité selon la revendication 3, **caractérisée en ce qu'**on utilise, comme épaississants, dans le composant B, des épaississants organiques du groupe des épaississants naturels organiques tels que la gélose, le carragène, la gomme adragante, la gomme arabique, des alginates, les pectines, les polyoses, la farine de guar, l'amidon, les dextrines, les gélatines, la caséine, ou bien des épaississants organiques complètement ou partiellement synthétiques tels que la carboxyméthylcellulose, l'éther cellulosique, l'hydroxyéthylcellulose, l'hydroxypropylcellulose, des dérivés de l'acide poly(méth)acrylique, l'éther polyvinylique, l'alcool polyvinylique, des polyamides, des polyimines.

6. Composition d'adhésif/matériaux d'étanchéité selon au moins une des revendications précédentes, **caractérisée en ce qu'**on utilise, comme catalyseur pour la réticulation du silane, des composés d'organoétain.

7. Composition d'adhésif/matériaux d'étanchéité selon au moins une des revendications précédentes, **caractérisée en ce que** le silane à bas poids moléculaire et organofonctionnel est choisi parmi le 3-glycidoxypropyltrialcoxysilane, le 3-acryloxypropyltrialcoxysilane, le 3-aminopropyltrialcoxysilane, le vinyltrialcoxysilane, le phénylaminopropyltrialcoxysilane, l'aminoalkyltrialcoxydisilane, le N-(2-aminoéthyl)-3-aminopropyltrialcoxysilane, le 3-glycidoxy-propylalkyldialcoxysilane, le 3-acryloxypropyl-alkyldialcoxysilane, le 3-aminopropyl-alkyldialcoxysilane, le vinylalkyldialcoxysilane, le phénylaminopropyl-alkyldialcoxysilane, l'aminoalkyl-alkyldialcoxydisilane, le N-(2-aminoéthyl)-3-aminopropylalkyldialcoxysilane, le i-butylméthoxysilane ou leurs mélanges.

8. Composition d'adhésif/matériaux d'étanchéité selon au moins une des revendications précédentes, **caractérisée en ce que** le composant B contient de l'eau à concurrence de 1 à 20 % en poids, de préférence à concurrence de 3 à 15 % en poids, rapportés au poids total du composant B.

9. Composition d'adhésif/matériaux d'étanchéité selon au moins une des revendications précédentes, **caractérisée en ce que** la proportion des composants A et B s'élève de 1 : 5 à 5 : 1, de préférence de 1 : 2 à 2 : 1, de manière particulièrement préférée à 1 : 1.

10. Utilisation de la composition d'adhésif/matériaux d'étanchéité selon au moins une des revendications précédentes pour le collage élastique de deux substrats identiques et/ou de types différents, ou plus.

11. Procédé pour la liaison en l'absence d'une couche primaire, de deux substrats identiques et/ou différents ou plus, **caractérisé en ce que**
- on applique sur un substrat une composition d'adhésif/matéfiaux d'étanchéité selon au moins une des revendications 1 à 8 ;
- on joint l'autre substrat ou les autres substrats à la surface mise à nu de l'adhésif/du matériaux d'étanchéité ;
- et on peut traiter ultérieurement et/ou transporter sans tarder le composite ainsi obtenu, en l'absence d'une fixation mécanique supplémentaire.

12. Procédé selon la revendication 10, **caractérisé en ce que**, avant l'application, on mélange le composant A au composant B dans un rapport de 1 : 5 à 5: 1, de préférence de 1 : 2 à 2 : 1, de manière particulièrement préférée à 1 : 1 partie(s) en poids.

13. Procédé selon les revendications 11 et/ou 12, **caractérisé en ce qu'**on utilise, à titre de substrats à relier, des éléments de construction en métal (le cas échéant laqué) tel que l'aluminium, en acier (en particulier en acier spécial), en aciers zingués, en aciers prétraités (en particulier phosphatés), en cuivre, en laiton, en verre, en bois et/ou en matières synthétiques.
